(19) Europäisches Patentamt
European Patent Office
Office européen des brevets

(11) **EP 4 390 716 A1**

(12) **EUROPEAN PATENT APPLICATION**

(43) Date of publication:
**26.06.2024  Bulletin 2024/26**

(21) Application number: **22214528.6**

(22) Date of filing: **19.12.2022**

(51) International Patent Classification (IPC):
**G06F 16/22** (2019.01)          **G06N 3/044** (2023.01)
**H04W 4/02** (2018.01)

(52) Cooperative Patent Classification (CPC):
**H04L 67/52; G06F 21/6245; G06N 3/0442;
G06N 3/048; G06N 3/084; G06Q 10/04;
G06Q 10/083; G06Q 10/109; H04L 9/32;
H04L 9/3234; H04L 9/3236; H04L 9/3239;
H04L 9/50; H04W 4/02; H04W 4/021;**          (Cont.)

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(71) Applicant: **Green Convenience GmbH
60549 Frankfurt am Main (DE)**

(72) Inventors:
• **DAGTEKIN, Deniz
  65329 Hohenstein (DE)**
• **CHOUCHANE, Amine
  64293 Darmstadt (DE)**
• **DAUTH, Benjamin
  63477 Maintal (DE)**

(74) Representative: **Köllner & Partner mbB
Vogelweidstraße 8
60596 Frankfurt am Main (DE)**

(54) **METHOD FOR PREDICTING CORE TIMES OF PRESENCE**

(57)    Method (100) for calculating predicted core times of presence (7) of a user, the method (100) comprising forwarding (S101) address information data (1) of the user together with identification data (2) of said user together with the authentication information of a respective operator to a time prediction system (3) as first input data; sequentially forwarding (5102) location information data (5) of the user together with identification data (2) of said user together with the authentication information of the respective operator to the time prediction system (3) as second input data (6); checking (S103) the operator's authentication by the time prediction system (3); processing (5104) the first input data (4) and the second input data (6) by the time prediction system (3) for calculating predicted core times of presence (7) of the user as output data (8) based at least on the address information data (1) and on the location information data (5) of the user, wherein the processing (S104) comprises converting (5105) address information data (1) of the user into a position of the address on a Relative Map using a conversion from longitude and latitude to a coordinate on the Relative Map and then hashing the corresponding coordinate to an address geohash (9), the processing furthermore comprises converting location information data (5) of the user into a position of the location on said Relative Map using a conversion from longitude and latitude to a coordinate on the Relative Map and then hashing the corresponding coordinate to a location geohash , the Relative Map being a hypothetical map without any real map data linked to planet earth.

FIG. 3

(52) Cooperative Patent Classification (CPC): (Cont.)
     **H04W 4/029; H04W 12/02; H04W 12/63**

**Description**

The present invention relates to a method for calculating core times of presence of a user and to a method for requesting the presence prediction of at least one user at a specific address. Also, the present invention relates to a data processing system comprising means for carrying out the above-mentioned methods, as well as to a computer program product and to a computer-readable storage medium comprising instructions which, when executed by a computer, cause the computer to carry out the above-mentioned methods.

Different approaches are known for predicting the presence or absence of a person at a specific location during a particular time frame. The result can be usefully notified to a terminal of a home-delivery company for optimizing the delivery time of the products.

For example, the prediction can be carried out on the basis of data representing an amount of power consumption in a predetermined place (e.g., a home, a workplace, or the like). However, this approach lacks functionality and reliability. As a matter of fact, following the results of a dedicated study, a quarter of the households tested had to be removed from the study because their energy consumption did not vary enough to create a profile. Energy use does not necessarily reflect consumer activity or presence, and automatic appliances, a running washing machine, or a heater on could skew the results. Participants had to fill an extensive questionnaire about their private life, and energy experts were necessary to make conclusions. In addition, obtaining consumer energy use data is not easy, and not in real-time unless consumers have smart homes. Consumers are not used to sharing energy data. Despite the innovative research direction, these problems prevent practical use. In addition, the study did not use any data protection or security technology.

Another approach utilizes data shared by the users when visiting particular locations to determine popular times and visit duration. In particular, it is possible to determine how active a location is at a particular moment compared to the usual level of activity. In addition, it is possible to determine how much time a user typically spends at a location by estimation based on patterns of user visits over the past weeks. In this approach, results are generated for public locations or stores. Precise users' locations are collected and stored, which can be retrieved if a hacker manages to have access to the data. In other words, sensitive information, such as which streets the user went along, which shops he visited, where the user lives, and the user's habits as well as preferences can be used illegally.

According to another approach, the user's location is predicted based on mobile location data. In a first step, a user's locations of interest are identified through density-based clustering. Next, the sematic (home or work) of the user's locations of interest are discovered, based on temporal assumptions and, finally, the future locations are predicted with a decision tree model that is trained in each user's historical location data. This approach only produces a weekly schedule and does not provide updates or optimizations in the further course during, for example, a delivery. In addition, this approach does not measure the distances of the user to the delivery address and does not remove time windows when attendance cannot be made on time from the schedule. Aside from the user's allowance of location use in the respective App, there is no privacy or security technology used in this approach, such as encryption or a verification mechanism, and the data processing is linked to real map data (longitude and latitude of a location).

Examples of the present disclosure seek to address or at least alleviate the above problems.

In a first aspect, there is provided a method for calculating predicted core times of presence of a user, the method comprising:

- forwarding address information data of the user together with identification data of said user together with the authentication information of a respective operator to a time prediction system as first input data;
- sequentially forwarding location information data of the user together with identification data of said user together with the authentication information of the respective operator to the time prediction system as second input data;
- checking the operator's authentication by the time prediction system;
- processing the first input data and the second input data by the time prediction system for calculating predicted core times of presence of the user as output data based at least on the address information data and on the location information data of the user;

wherein the processing comprises converting address information data of the user into a position of the address on a relative map using a conversion from longitude and latitude to a coordinate on the relative map and then hashing the corresponding coordinate to an address geohash, the processing furthermore comprises converting the location information data of the user into a position of the location on said relative map using a conversion from longitude and latitude to a coordinate on the relative map and then hashing the corresponding coordinate to a location geohash, the relative map being a hypothetical map without any real map data linked to planet earth.

In a second aspect, there is provided a method for requesting a presence prediction of at least one user at a specific address, the method comprising:

- calculating predicted core times of presence of at least one user at a specific address according to the method of the first aspect;
- generating an event by the user, wherein the event comprises in particular order information data with expected delivery of a product;
- forwarding a presence prediction request to the time prediction system;
- creating an event token by the time prediction system;
- sending an information request about core times of presence of at least one user at a specific address together with the event token to the time prediction system; and
- analyzing the validity of the event token and sending a result information including the previously calculated predicted core times of presence of the user at the requested delivery address, wherein the result information do not comprise any personal data of the user and no map data connected to real geographic positions on the earth.

In a third aspect, there is provided a data processing system comprising means for carrying out the method of the first aspect or the method of the second aspect.

In a fourth aspect, there is provided a computer program product comprising instructions which, when the program is executed by a computer, cause the computer to carry out the method of the first aspect or the method of the second aspect.

In a fifth aspect, there is provided a computer-readable storage medium comprising instructions which, when the program is executed by a computer, cause the computer to carry out the method of the first aspect or the method of the second aspect.

Other aspects and features are defined in the appended claims.

Examples of the disclosure may improve the prediction of the presence of a person at a specific location during a particular time frame. Differently from known approaches, the present methods allow a unique combination of data protection and security technology. As a matter of fact, the prediction is carried out by calculating address and location coordinates positioned on a virtual hypothetical map without any real map data, i.e. no addresses, no street names, and no countries. Accordingly, a possible hacker would not be able to revert the information and deduce personal data of the user (where the user lives, user's habits, locations visited by the user, and so on).

The user can be an APP user, i.e. a user who is using a mobile application, for example a person with a user ID on a mobile application portion of a software. Also, the operator can be an APP operator, i.e. an operator offering a service using a mobile application.

In addition, the prediction of core times of presence can be carried out for a specific time frame, i.e. for the subsequent days. Predicted core times of presence are the timeframes calculated as highly probable that at least one person will be present at the address. Also, the predictions can be done with live optimization in order to reduce possible mistakes in the prediction. In particular, live optimization includes the use of different models for different prediction timeframes in the further course of i.e. a delivery, to update the predictions. Additionally, live optimization includes a backup check, which measures the distance between the address position on the Relative Map and the current location on the Relative Map of App users, and deletes predicted core times of presence, when the distance to the address is too large for the related App user to be at the delivery address in time. This backup check is done to reduce prediction errors from the proposed core times of presence. If there are no outlier cases, the system will correct its own predictions in time. In particular, the updated core times of presence could be used to avoid failing home delivery attempts automatically if it is connected with the related delivery systems, like Tour planning systems and routing systems.

Not knowing about future presence at locations causes misallocation of resources, inefficient processes, and issues in customer experiences. The system can also be used to predict agglomerations of individuals at an address or specific location. The present approach of self-optimizing and self-correcting predictions of core times of presence can be used to optimize the planning of traffic, offers, personnel and resources. It can be applied to generate valuable insights leading to improved decision-making and can trigger automated measures to reduce the effects of upcoming problems automatically. This means it can be used as a part of Prescriptive Analytics, meaning generating automated action recommendations based on Predictive Analytics.

Examples of the disclosure will now be described by way of example only with reference to the accompanying drawings, in which like references refer to like parts, and in which:

Figure 1 is a flow diagram of the method for calculating predicted core times of presence of a user according to an example.
Figure 2 is a schematic representation of the method steps carried out by time prediction system according to an example.
Figure 3 is a schematic representation of an information exchange overview between a user, an App operator, and the time prediction system according to an example.
Figure 4 is a flow diagram of the method for c for requesting a presence prediction of a user according to an example.
Figure 5 is a schematic representation of the method steps carried out by time prediction system after generation of an event according to an example.

Figure 6 is a schematic representation of an information exchange overview between a user, an App operator, and the time prediction system upon generation of an event by the user according to an example.

Figures 7A and 7B are flow diagrams of a "post position API" and of an "event token API" according to an example.

Figures 8A and 8B are flow diagrams of a "core times API" and of a "Backup check API" according to an example.

Figures 9A to 9C are schematic representations of a RNN cell, a LSTM cell, and a PewLSTM cell, respectively.

Figure 10 is a schematic representation of a PewLSTM architecture.

Figure 11 is a schematic representation of a computer system according to an example.

A method for calculating predicted core times of presence of a user such as an App user and a method for requesting a presence prediction of an App user are disclosed. In the following description, a number of specific details are presented in order to provide a thorough understanding of the examples of the disclosure. It will be apparent however to a person skilled in the art that these specific details need not be employed in order to practice the examples of the disclosure. Conversely, specific details known to the person skilled in the art are omitted for the purposes of clarity in presenting the examples.

The present approach enables knowing the core times when users (i.e., consumers) will be present at addresses in compliance with the General Data Protection Regulation (GDPR). For this, the operator, such as an App Operator 22, interacts with a time prediction system 3, as will be described in the following. The time prediction system 3 is configured to provide a Data protection compliant Core times of Presence Prediction (DCP). Therefore, the time prediction system 3, according to the present disclosure, can also be intended as a DCP system.

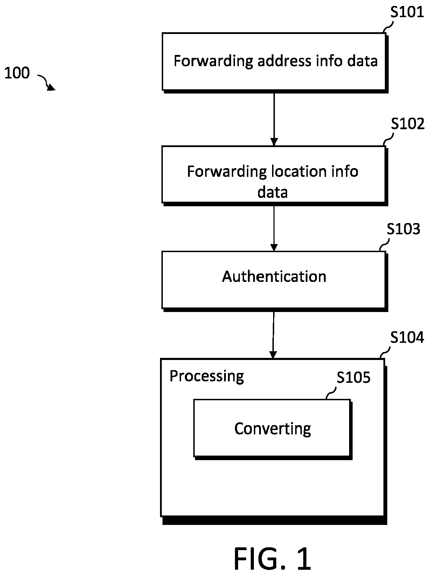

As shown in figure 1, the method 100 for calculating predicted core times of presence 7 of a user comprises at step S101 the forwarding of address information data 1 of the user together with identification data 2 to the time prediction system 3. In particular, these information data - that correspond to first input data - are sent by the App operator to the time prediction system 3 through a forwarding element, such as for example an App operator 22. At step S102, location information data of the App user are forwarded to the time prediction system 3 together with identification data 2 of the App user. These data - that correspond to second input data - are forwarded in a sequential manner meaning that are sent more than once at different times. At step S103, the authentication of the App Operator is checked by the time prediction system 3. This is actually done with every request received by the time prediction system 3. Requests without a valid authentication are not processed. The first input data 4 and the second input data 6 are then processed at step S104 for calculating predicted core times of presence 7 of the App user. This results in a prediction of the core times of presence 7 as output data 8 based at least on the address information data 1 and on the location information data 5 of the App user. The predicted core times of presence 7 are the timeframes DCP calculated as highly probable that at least one person will be present at the address. The processing of the input data comprises a conversion step (S105). In particular, the address information data 1 of the App user are converted into a position of the address on a Relative Map which are then hashed into an address geohash 9 using a hash function. The location information data 5 of the App user are converted into a position of the location on the Relative Map, which are then hashed using a hash function to obtain a location geohash 10. It is noted that the Relative Map is not a real geographic map but rather a virtual hypothetical map without any map data connected to real geographic positions on the earth. Advantageously, any attempt to revert the geohashes to the original data would only give fictitious information not related to the real personal data and address and location data provided by the App user, thereby increasing the data protection and security of the App user. As will be detailed in the following, the DCP system uses multiple layers of data protection and security technology to fulfill global data protection standards.

It is noted that the DCP system uses prescriptive analytics, which means providing automated action recommendations concerning the future based on facts and probability-weighted projections based on predictive analytics. Predictive analytics encompasses various statistical techniques such as data mining, predictive modeling, machine learning, and AI that analyze current and historical facts to make predictions about future or otherwise unknown events.

As input data (first and second input data), the App user's mobile location data can be considered as the core data. However, additional data, such as regional information data, can additionally be used.

In examples, the method 100 comprises providing the time prediction system 3 with additional information data 15 as third input data 16, wherein in particular additional information data 15 comprise weather data. The automated analysis of this information is used to learn the effects of such conditions (i.e. weather) on presence patterns at addresses and improve predictions. It is noted that regional information data are not limited to information such as weather information and that further data sources can be added. Further data sources may include, but are not limited to, information, such as traffic or local holidays.

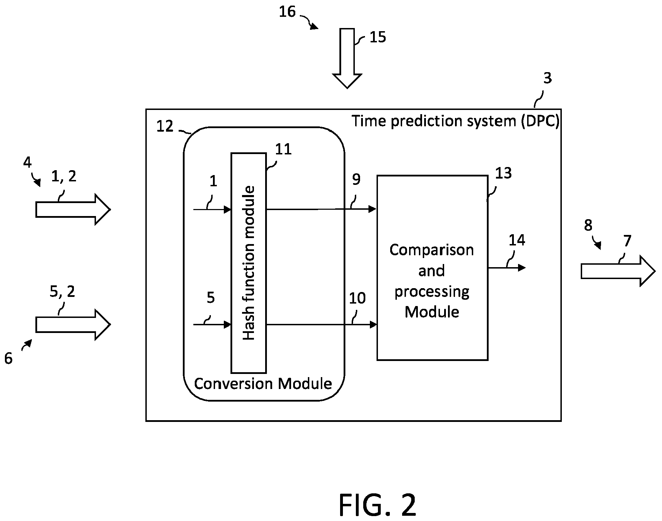

Figure 2 schematically illustrates the elaboration of the input data 4, 6, 16 into the output data 8. The first input data 4 comprise at least address information data 1 and identification data 2 of the App user. These data are provided to the time prediction system 3 or DPC system only once. The second input data 6 comprise at least location information data 5 and identification data 2 of the App user. These data are sequentially provided to the time prediction system 3.

Additionally, third input data 16 are provided to the time prediction system 3. These data comprise in particular additional information data 15, such as weather information.

The time prediction system 3 comprises a conversion module 12 for converting address information data 1 and the location information data 5 received by the App Operator into hashes. Specifically, the address information data 1 of the App user are converted into a position of the address on the Relative Map to form a geohash related to the address (i.e. an address geohash 9), whereas the location information data 5 of the App user are converted into a position of said location on the Relative Map to form a geohash related to the location (i.e. a location geohash 10). This is done through a hash function module 11. The Relative Map is represented as a grid with coordinates and, as already mentioned, it is a hypothetical map without any real map data (no addresses, no streets, no countries). Specifically, the longitude and latitude are transformed into a coordinate on a Relative Map. This coordinate will be then hashed using a hash function to obtain a geohash. In other words, the exact position of a location on earth of the App user is deleted from the address geohash 9 and location geohash 10 when converting the location information data 5 and address information data 1 of the App user into positions of the address and of the location on the Relative Map. The App user number is hashed using a MD5 algorithm.

In examples, the position of the address geohash 9 is periodically compared with the position of the location geohash 10 on the Relative Map to obtain comparison result data 14 for predicting the core times of presence 7 of the App user. For this, the time prediction system 3 also comprises a comparison and processing module 13. In particular, the distance between the position of the address on the Relative Map and the positions of other visited locations on the Relative Map are calculated to obtain the comparison result 14.

The periodical comparison, serves as basis to provide a prediction of core times over a determined time frame. The periodical comparison assures also the continual learning of core times of presence and guarantees the update of the core times of presence if a change in patterns or behaviors is detected.

In examples, if the position of the address geohash 9 repeatedly matches the position of the location geohash 10 on the Relative Map in a determined time frame, then a corresponding core time of presence 7 prediction is calculated. This occurs for example if there is a prediction request by the App operator. The prediction only occurs, if there is a prediction request caused by a predefined event and will only be repeated until the event, i.e. home delivery, is completed. In other words, the presence of the App user at a determined address is predicted over a determined time frame.

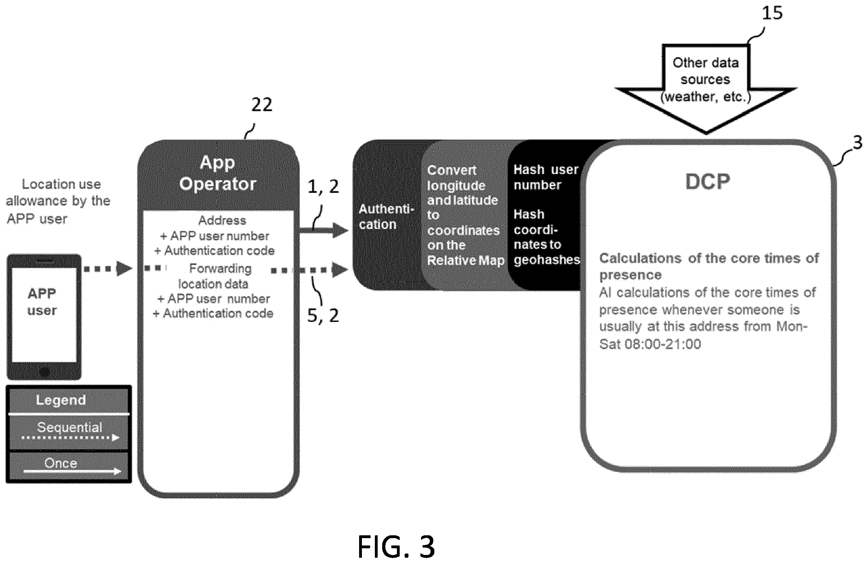

Figure 3 shows an application of the method 100. It is noted that the DCP system can be integrated into a mobile application (App) and can be used by companies operating an App and companies whose offer is directed to a company offering an App if they are system-wise connected. In examples, the first input data 4 and the second input data 6 are forwarded to the time prediction system 3 by an App operator 22.

The DCP system can be integrated via an Application Programming Interface (API). To work at full capacity, DCP needs to be integrated into agile systems, which are capable of processing live data. DCP can additionally operate as White Label Solution invisible within the systems it was integrated into, as an additional feature. Examples of essential systems that can be connected with DCP at integration in a Last Mile Logistics use case could be the offer processing system of an online retailer as well as the transport management system, tour planning system, and routing system of a CEP service provider.

With reference to figure 3, the App user (or consumer) allows the location use inside the App of the App operator 22. Once this happened, the App operator 22 automatically forwards the address information data 1 together with the user ID number 2 of the App user to the time prediction system 3 (i.e., DCP system). Additionally, the location information data 5 and the ID number 2 of the allowing App user are sequentially forwarded by the App operator 22 to the DCP system 3. It is noted that the sequential transmittal of the data are identified with a dashed line in the figure, whereas the single transmittal with a continuous line.

As soon as any request is directed to the DCP API system, the first step is authentication. New App Operators receive an authentication code in the DCP integration process, which has to be sent with every request the App operator sends to the DCP API. In particular, the method 100 comprises checking this authentication code by the time prediction system 3, upon receiving at least first and second input data 4, 6. Requests without valid authentication code are not processed, and incoming data without authentication code is automatically rejected.

After successful authentication, the address data 1 and location data 5 are converted to positions on the Relative Map and then hashed into geohashes using a hashing function. As already mentioned, the Relative Map is a hypothetical map without any real map data (no addresses, no streets, no countries). The App user number 2 can be hashed using the MD5 algorithm.

The position of the address hashes on the Relative Map is compared with the position of the location hashes on the Relative Map. If the positions match, it is recognized that the App user with the hashed customer number is at the address. In addition to this position comparison on the Relative Map, weather data 15 can be added to the time prediction system 3. These data analytics and weather information are used to learn the effects of such conditions on presence at the address to improve predictions. More data sources can be added. The core times of presence can be calculated through AI-powered Prescriptive Analytics, which are calculations of the core times when always someone is at this address. For example, in a home delivery use case, these predictions can be limited to times of preferred shipment acceptance, such as Mo-Sa 08:00-21:00 as shown in figure 3.

In examples, the core times of presence 7 of the App user can be updated if a variation in the match between the position of the address geohash 9 and the position of the location geohash 10 on the Relative Map occurs in a predefined period of time. Capturing changes in presence behavior and updating presence predictions accordingly is vital to adapt to situations like changing work times or changing habits. For example, someone taking on a night shift job, or someone starting to go for a walk in at noon time and similar changes can affect presence predictions. These changes are especially important to capture for certain services relating to consumer presence, such as home delivery.

As will be described in more detail in the following, the data are processed using a Machine Learning or Deep Learning approach in order to predict core times of presence 7 of the App user. A Machine Learning or Deep Learning model is trained to calculate the presence of the App user at a specific time frame. Specifically, the comparison result data 14 obtained by the distance calculated between the position of the address and the positions of other visited locations on the Relative Map are fed into a Machine Learning or Deep Learning algorithm to perform a core times of presence prediction.

The algorithm learns the behavior and the pattern of the App user using the comparison result data 14 by trying to reduce the error of false prediction of core times of presence in the past. The present approach uses for example a PeWLSTM model. PeWLSTM is a Deep Learning model that emerged from prior Deep Learning models, such as Recurrent Neural Network (RNN) and Long Short Term Memory Network (LSTM). It adds the weather component in the prediction process and can optimize certain shortcomings of the prior approaches. The present approach merges components of PeWLSTM with unique data protection and security technology to a new type of technology, capable of providing data protection compliant predictions about highly sensitive use cases, such as consumer presence.

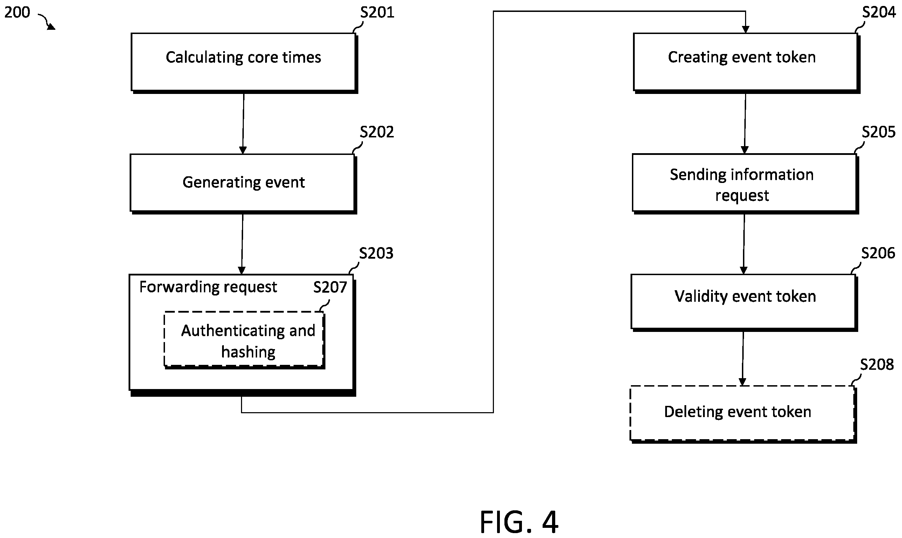

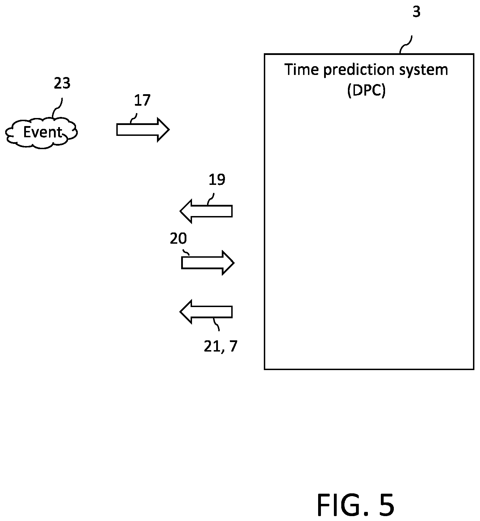

Figure 4 is a flow chart of a method 200 for requesting a presence prediction of an App user. In particular, for requesting a presence prediction of at least one user at a specific address. This can be useful in case of more than one user at the same address. The steps of the method 200 can be better understood in combination with figure 5 illustrating the operation of the time prediction system 3. At step S201, the predicted core times of presence 7 of the App user are calculated. This prediction is obtained according to the method 100 as described above. Therefore, all the detailed steps will not be repeated. At step S202, an event 23 is generated by the App user. The event 23 can be for example a commercial order. A presence prediction request 17 is then forwarded to the time prediction system 3 (S203).

In examples, the presence prediction request 17 comprises a delivery address 18, a user number of the App user, an authentication code of the App Operator, and event information data, the event information data informing in particular that the event 23 is occurring.

At step S204, an event token 19 is created by the time prediction system 3 and an information request 20 about core times of presence 7 of the App user is sent together with the event token 19 to the time prediction system 3 (S205).

Finally, at step S206, the validity of the event token 19 is analyzed and a result information 21 including the previously calculated predicted core times of presence 7 of the App user at the requested delivery address is sent. It is noted that the result information 21 does not comprise any personal data of the App user and no map data connected to real geographic positions on the earth.

In examples, the method comprises authenticating and hashing the presence prediction request 17 by the time prediction system 3. This is carried out at step S207.

Upon completion of the event 23 generated by the App user, the method can comprise deleting the event token 19 (at step S208).

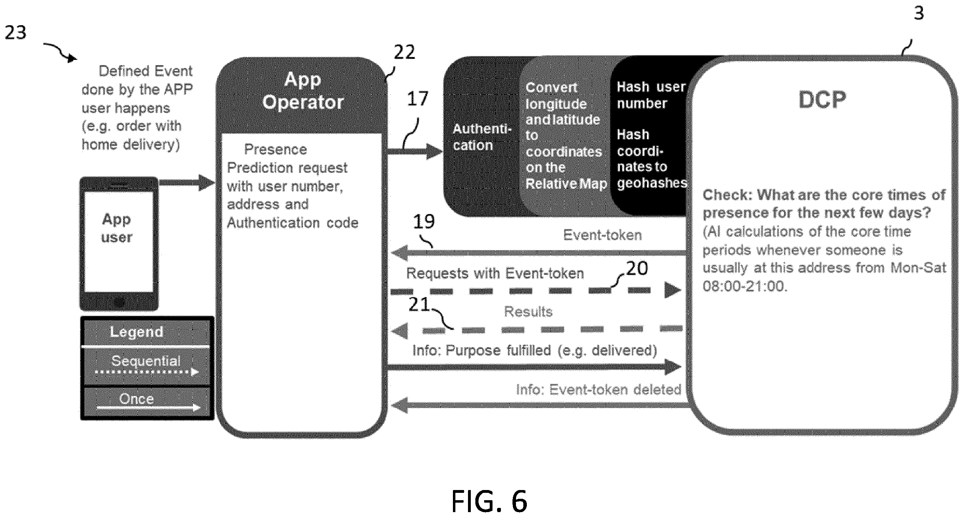

Figure 6 shows an application of the method 200.

An event 23 (e.g. an order with expected home delivery) is generated. As soon as said defined event 23 happens, the information that this event happened is forwarded - together with the corresponding customer number and address - to the DCP system 3 in a presence prediction request 17.

After successful authentication and hashing of this request 17, the DCP system 3 automatically creates and sends back an event-token 19. With this event token 19, it is possible to send an information request 20 to the DCP API system 3 to obtain a result information 21. If an event token 19 is valid, the DCP system 3 replies with the result information 21. Within this result information 21 only the predicted core times of presence 7 at the address are present. The delivery address itself and App user number 2 are not within this result 21, meaning the result 21 does not contain any personal data. In other words, the names of App users/consumers remain unknown to the DCP system 3 in the complete relationship between the App operator 22 and DCP system 3. Only the entitled App operator 22, who provided the App information in the first place, can link the results to an address, as the App operator 22 knows for which App user the event token 19 has been requested.

As soon as the purpose of the event token 19 is fulfilled (e.g. shipment delivered) this information is automatically forwarded to the DCP system 3. The DCP system 3 automatically and immediately deletes the event token 19 and sends back the information that the event token 19 has been deleted. It is impossible to obtain any information with a deleted token, and all requests with a deleted token are automatically rejected.

It is noted that the software of the DCP system 3 was built to exceed all global data protection standards to ensure worldwide applicability and acceptance. Therefore, a minimum personal data approach was pursued, meaning using the absolute minimum regarding personal data necessary to reach the purpose the App user agreed upon in the App (mobile application) of an App operator 22 using the DCP system 3.

As mentioned above, the present approach improves data protection and security. The DCP system 3 processes mobile location data under significantly stricter standards than known prevailing Location Based services (LBS), which on the other hand obtain data from offers such as local news or weather information services. The DCP system 3 sets new standards in data protection and security by a variety of measures covered in the following.

1. Authentication code

Due to the authentication code, only entitled App operators 22 can interact with the system regarding events 23 of their own App users.

2. No names & hashing of all incoming data

The system cannot process or accept names, so names remain unknown to the system. App user numbers, addresses, and location data are hashed. There is no plain text data within the system.

3. Relative Map (no real addresses & no real positions)

The address and location data 1, 5 are in the system as geohashes 9, 10. These geohashes 9, 10 are stored as positions on the Relative Map without any map data that could link to planet earth. As there is no real map data, even if the system were to be hacked and the hacker would find a way to "unhash" the hashed positions and the hashed address, it would be impossible to make use of the data as it would only be positions on a map without any map data related to planet earth (no addresses, no cities, no countries). Contrary to prevailing LBS, the present approach does not track which streets App users used while traveling, or which addresses and shops they visited. Furthermore, the DCP system 3 does not analyze purchasing preferences and is not used to influence users/consumers in any way.

4. No absence confirmation or prediction

The DCP system 3 does not predict absence timeframes and the results do not confirm absence. In general, timeframes at addresses can be divided in the categories core times of presence, core times of absence and variable behavior. The DCP system 3 cannot differentiate between and does not analyze core times of absence and variable behavior. Instead, the present approach only predicts the core times of presence when usually always someone is present at the address and updates these timeframes.

5. Location use allowance

The DCP system 3 only processes data of App users which confirmed continuous location use in an App of an App operator 22 with DCP integration for purposes made available to the App user in the confirmation process.

6. Event-token/ Provided results without addresses & personal data/ time limit

The results DCP creates can only be accessed with a valid event token 19. This token is sent to the party, which provided the App user information in the first place. The processed results, which are only available with a valid event token 19 until the event 23 purpose is fulfilled (e.g. shipment is delivered), do not contain addresses or personal information of the App user. Only the entitled App operator 22, who requested the event token 19 can link the results to an address for the duration of the event 23 (e.g. delivery).

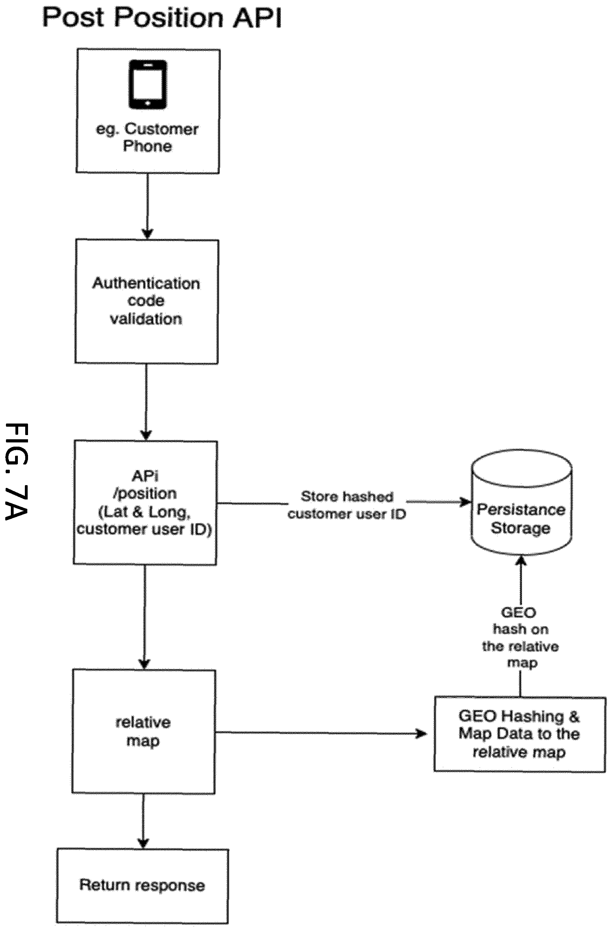

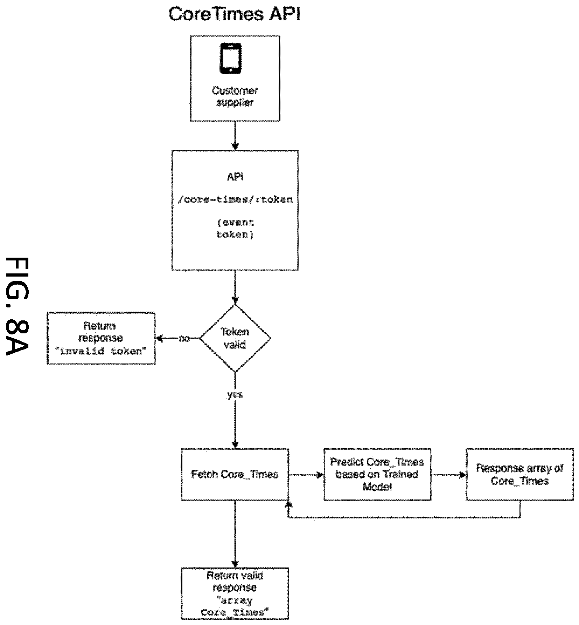

In figures 7A-7B and 8A-8B, flow diagrams regarding operational aspects of the above-described methods are illustrated. These flow diagrams represent Application Programming Interfaces (API). An API is a public endpoint that checks authentication, collects and forwards data, and gives information back.

API Figure 7A, the Post Position API, collects the authentication code and checks if it is valid. If it is not valid, the request is rejected. If it is valid, the request is authenticated, and the customer ID 2 is hashed and stored in Persistance Storage, and the longitude and latitude are converted to positions on the Relative Map and converted to geohashes which are stored in Persistance Storage.

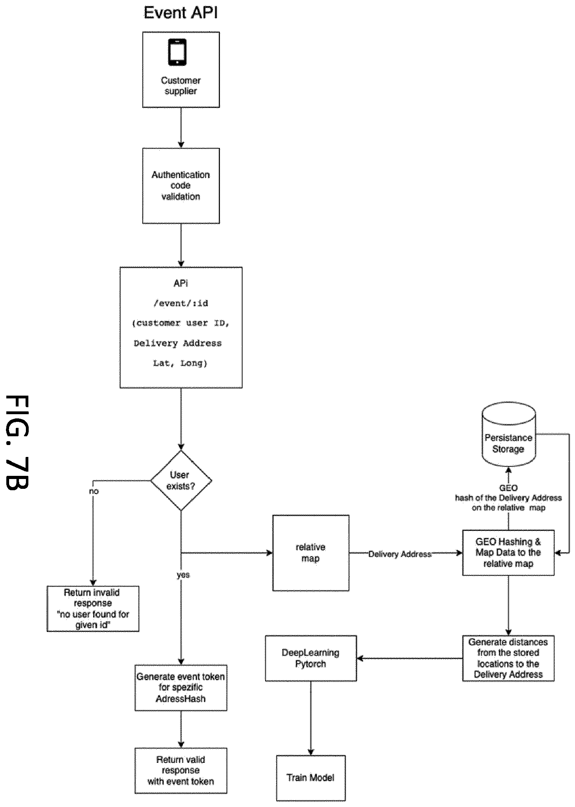

API Figure 7B Event API, collects the authentication code and checks if it is valid and the user exists. If it is not valid, the request is rejected. If it is valid, the request is authenticated. The latitude and Longitude of the delivery address will then be converted to a position on the Relative Map and hashed as Geohash 9. The Geohash of the address 9 will then be stored together with the hashed customer ID and the information that a defined event 23 happened in the Persistance storage. After the Relative Map calculated the distances with the stored data, it will feed the Model with the distances of the delivery address and train the Model.

API Figure 8A, Core Times API, collects the event token and checks if it is valid. If it is not valid, the request is rejected, if it is valid, the system fetches the predicted core times based on the trained model and returns them as an array of core times of presence. Fetching and predicting core times of presence 7 will be repeated if the event is not finished to double-check the predictions and to respond to any changes in the behavior of the App user.

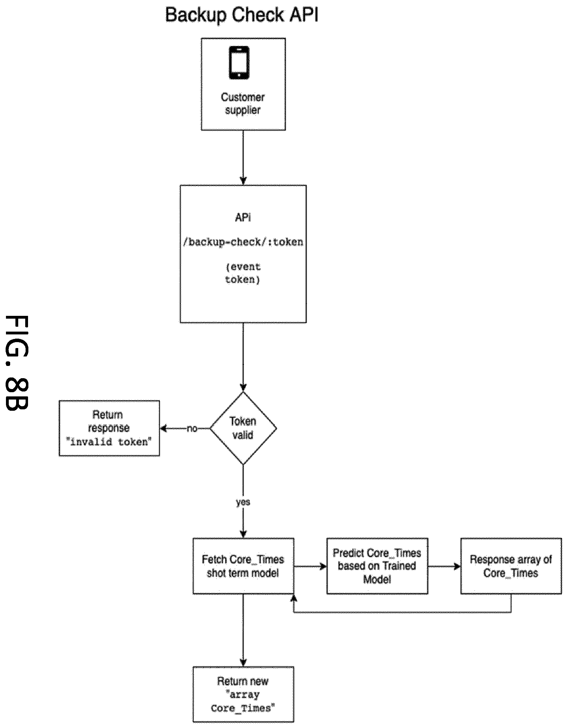

API Figure 8B, Backup Check API, collects the event token 19 and checks if it is valid. If it is not valid, the request 20 is rejected. Also, it will check if the User exists and if not the request 20 will be also rejected. When it is valid, longitude and latitude will be forwarded to the Relative Map. The longitude and latitude are converted to positions on the Relative map and hashed to geohashes. The geohashes are stored in Persistance storage.

In examples, the prediction of the core times of presence 7 is carried out using a Machine Learning or Deep Learning approach, in particular using a Recurrent Neural Network, RNN, model, or a Long Short-Term Memory, LSTM, model such as a Periodic LSTM with Weather-Aware Gating Mechanism, PewLSTM.

The model according to the present approach aims to predict App users' core time windows of presence at addresses, in part based on historical data. This kind of problem is called "*time series forecasting*". Many models are used to solve such a problem. For example, the univariate "Auto-Regressive Moving Average (ARMA)" for a single time-series data, which combines Auto-Regressive (AR) and Moving Average (MA) models, or the Univariate "Auto-Regressive Integrated Moving Average (ARIMA)" which takes into consideration the differencing in comparison to ARMA are all traditional methods for time series data prediction. New approaches have been recently introduced with the prevalence of Machine Learning (ML) and Deep Learning (DL) techniques. The most successful algorithms were Deep Learning-based such as Recurrent Neural Network (RNN) and especially the Long Short-Term Memory (LSTM). The "PewLSTM", is a new periodic weather-aware LSTM model. The PewLSTM assesses the historical data along with weather and weekdays to estimate the future parking behavior and results in better accuracy of about 20% than the state-of-the-art parking behavior prediction method. As the problem of predicting the core time presence of a person's presence at a specific address is weekday- and weather-dependent, the PewLSTM appears to be suitable to be used for the present approach.

In the following, the time series forecasting problem, the idea behind deep learning models, mainly the LSTM and the periodic LSTM with Weather-Aware Gating Mechanism, and evaluation metrics are described.

Time series data is a collection of successive quantities collected over even intervals in time. These measurements are used to track the development of the data. Analyzing them using statistics and models to predict the evolution of the variable in the future is called time series forecasting. Time series forecasting can be either univariate when a single feature is used or multivariate when using multiple features (which is more complex). Predicting a single value for the subsequent time-step or multiple time-steps in the future are respectively called one-step and multi-step time series forecasting. As mentioned above, the difference between univariate and multivariate forecasting is the number of features used to train the model, and, therefore, only the dimension of the input vector needs to be changed. However, there are numerous methods for multi-step forecasting in comparison to one-step, among which we mention: direct multi-step, recursive multi-step, and multiple output forecast. In a direct multi-step forecast, a different model is trained for each prediction time step, which differs from the recursive multi-step forecast in which the one-step model is recursively used each time for a prediction. In a multiple-output forecast, a model is trained to predict the whole output in a one-shot as a vector.

One of the Deep learning approaches for time series forecasting is the RNN. A recurrent neural network is a deep learning model whose input is sequential data, such as time-series data. Its output depends on prior elements within the sequence, in contrast to traditional deep neural networks, which assume that inputs and outputs are independent. RNNs can handle variable-length sequence inputs by using their internal state (memory), and the internal state is called a recurrent hidden state.

We define x = $(x_1, x_2, x_3, ..., x_t)$ the input sequence and $h_t$ the recurrent hidden state at time step t. $h_t$ is updated using the equation:

$$h_t = \sigma(W_x x_t + W_h h_{t-1} + b_t)$$

where the nonlinear activation function is denoted by $\sigma$, which can, for instance, be a logistic sigmoid, a hyperbolic tangent function, or rectified linear unit (ReLU). $W_x, W_h$ stand weight matrices, and $b_t$ for the constant bias.

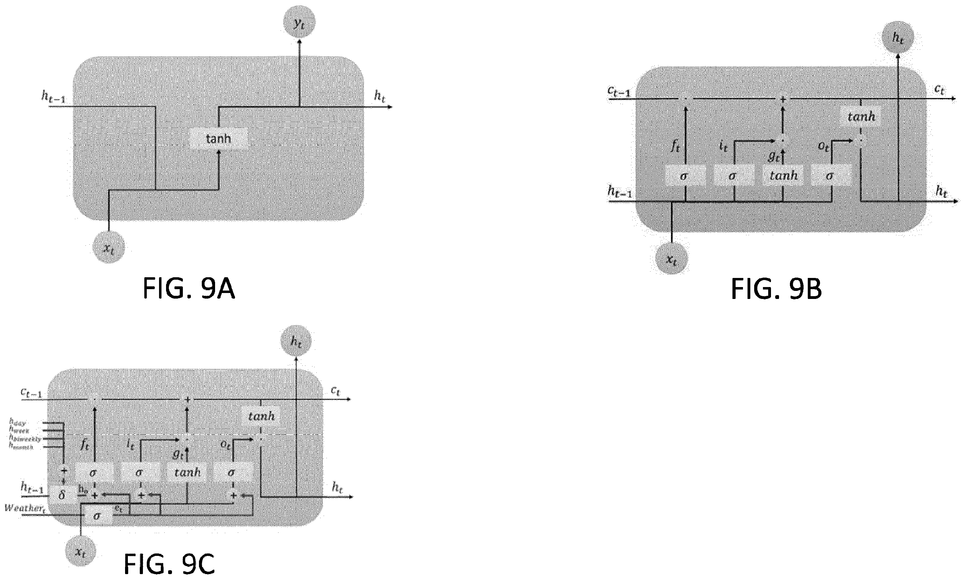

The RNN cell is represented in figure 9A.

RNNs showed difficulties in learning long-term dependencies, as it suffers from the "vanishing gradients" problem. The gradient is the partial derivative of a function concerning its inputs, and it measures the impact of the change of the input on the output. The "vanishing gradient" problem happens when the weight matrices become so small that the model does not learn anymore. Since a long sequence implies many layers, the gradient is easily prone to vanish. This problem is addressed by the Long the Short-Term Memory (LSTM) Model.

Its variables are:

$$f_t = \sigma(W_{fx}x_t + W_{fh}h_{t-1} + b_f)$$

$$i_t = \sigma(W_{ix}x_t + W_{ih}h_{t-1} + b_i)$$

$$g_t = \tanh(W_{gx}x_t + W_{gh}h_{t-1} + b_g)$$

$$o_t = \sigma(W_{ox}x_t + W_{oh}h_{t-1} + b_o)$$

$$c_t = g_t \odot i_t + c_{t-1} \odot f_t$$

$$h_t = \tanh(c_t) \odot o_t$$

Wherein $f_t$ stands for the forget gate and determines the information that needs to be forgotten from the LSTM memory. The input gate that determines whether the new information will be stored in the LSTM memory, is represented by it. $g_t$ is the cell input activation through which the vector of new candidates is stored in the LSTM memory. $o_t$ is the output gate that determines the value of the next hidden state. The cell state $c_t$ stores information from previous intervals in the LSTM cell, and in the hidden state, $h_t$ carries information from the previous cells to the next cell. The weight matrices $W$ represent how much a change in the input will have upon the output and the biases b determine the difference between the function's output and the desired result.

The LSTM cell is represented in figure 9B.

Although the LSTM model solves the "vanishing gradient" problem, it lacks learning periodic patterns and weather information. These missing features are in a Periodic LSTM with Weather-Aware Gating Mechanism LSTM called PewLSTM. The PewLSTM cell is represented in figure 9C.

The PewLSTM differs from the typical LSTM in that new gates have been added for past periodic observations and weather data. The behavior at the same time last day, last week, and last month can impact the current one. Biweekly behavior can also be considered since it often happens for human activities, such as work or studying. The variables $h_{day}$, $h_{week}$, $h_{biweekly}$ and $h_{month}$ describe the hidden states representing these behaviors. Then these hidden states are integrated with the hidden state $h_{t-1}$ of the LSTM using a special weight gate $\delta$ into the following equation. The purpose of the weight gate is to continuously update the weights of each parameter.

$$h_o = \delta(W_d h_{day} + W_w h_{week} + W_{bw} h_{biweekly} + W_m h_{mon} + W_{t-1} h_{t-1}$$

A weather aspect vector $e_t$ can be introduced to capture the influence of the weather information on presence behaviors, which is integrated into the forget-, input- and output gate. The weather at time step t is used as an input of a standard feedforward layer with a sigmoid activation function.

$$e_t = \sigma(W_e weather_t + b_f)$$

The weighted hidden state $h_o$ and the weather input $e_t$ are then integrated into $f_t$, $a_t$, and $r_t$, which are the forget-, input- and output gate, respectively. However, the equations of the hidden state $h_t$ and the cell state $c_t$ remain the same as for LSTM, as the periodic and weather information is already operated and saved by the modified variables $f_t$, $a_t$, and $r_t$, as illustrated in the following equation.

$$i_t = \sigma(W_{ix}x_t + W_{ih}h_o + W_{fe}e_t + b_i)$$

$$g_t = tanh\left(W_{gx}x_t + W_{gh}h_o + b_g\right)$$

$$f_t = \sigma\left(W_{fx}x_t + W_{fo}h_o + W_{fe}e_t + b_f\right)$$

$$o_t = \sigma\left(W_{ox}x_t + W_{oh}h_o + W_{fe}e_t + b_o\right)$$

In examples, the calculation of predicted core times 7 of at least one user at a specific address is repeated in sequences using different data processing techniques.

Together with the distance calculation of hashed location data and hashed address on the Relative Map (hypothetical map without real map data), the repetition in sequence using different techniques determines a live optimization. In particular, predicted core times of presence 7 are deleted when it is recognized that presence cannot be established in time at the address. Therefore, even if there is a mistake in the prediction of core times of presence for the next few days, the live optimization erases the mistake automatically if there is no outlier case. Outlier cases include but are not limited to situations where the App User turned off his or her mobile, the mobile of the App user has a dead battery, the App user left the mobile somewhere, or the unlikely event of a server breakdown.

A loss function is used during a model's training to determine how a model performs by representing the error between the model's output and the target variable (variable to be predicted). The goal is to get a loss as small as possible since it means the closeness between predicted and real data. There are many loss functions, such as the mean absolute error (MAE), the mean squared error (MSE) for continuous output data, and binary cross entropy (BCE) for binary data. Since the output is binary (predicted core time of presence or no predicted core time of presence in the timeframe). The binary cross entropy (BCE) loss is introduced along with a variation of this loss, which enables improving the result of the trained model.

The formula of Binary cross entropy loss is given through:

$$L = \frac{1}{N}\sum_{i=1}^{N} -\left(y_i * log(p_i) + (1 - y_i) * log(1 - p_i)\right)$$

wherein, $p_i$ and $y_i$ are the i-th scalar value of the model output and i-th scalar value the target value respectively. N stands for the output size.

The binary cross entropy loss requires using the sigmoid activation function before the target layer since the sigmoid compresses the output between 0 and 1. It works as the following: When the actual class value is 1, the second part disappears and vice versa. Since the target values pi are between 0 and 1 , the logarithmic of $p_i$ or 1 - $p_i$ is between -infinity and 0. So the closer the predicted value to the actual class is, the smaller the loss is.

The weighted Binary cross entropy loss is an extension of the Binary cross entropy loss. This extension is done by adding more weight to the positive examples to punish false predictions of positive examples. In particular, it punishes wrong predicted core times of presence at a certain position. The formula of weighted Binary cross entropy loss is given through:

$$L = \frac{1}{N}\sum_{i=1}^{N} -\left(w_i * y_i * log(p_i) + (1 - y_i) * log(1 - p_i)\right)$$

where $p_i$, $y_i$ and N are the same as before and $w_i$ the weight of positive examples.

As regards the input data for calculating the predicted core times of presence 7 according to the present methods are the distances for the address position, as mentioned above.

The distance d between the position of the address on the Relative Map and the position of other visited location on the Relative Map is then calculated using the distance formula on a 2D plane which is:

$$d = \sqrt{(x_2 - x_1)^2 + (y_2 - y_1)^2}$$

wherein $(x_1, y_1)$ is the position of the first point and $(x_2, y_2)$ of the second point on the Relative Map. The distance is given in meters. Outliers are then filtered using a Z-score of three and set as the minimum value of outliers. A Z-score of three means that any distance outside three standard deviations of the data distribution would be an outlier.

Weather data will be used as input data for the model along with the distances. Weather features include but are not limited to air temperature, relative humidity, wind speed, and precipitation height.

The data are normalized before being given to the model using the MinMax Scaler.

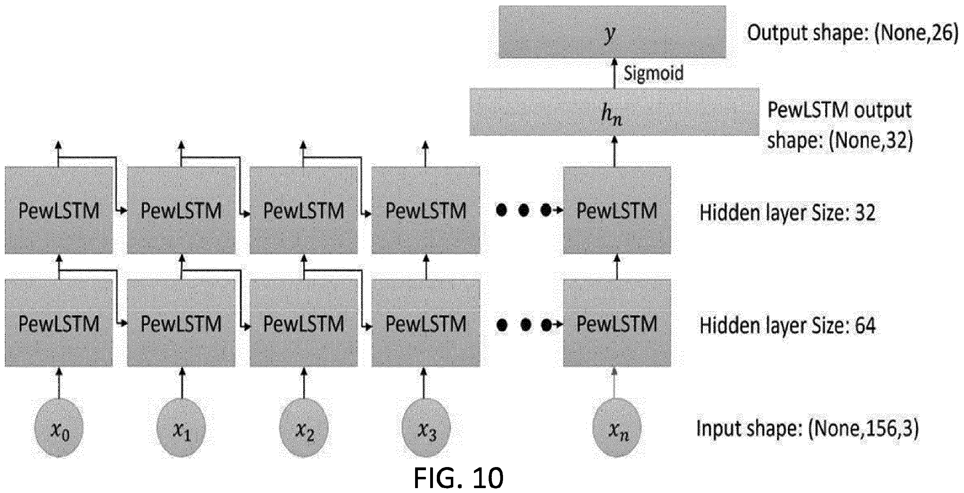

With reference to the model training, it is noted that the custom periodic LSTM with the weather-aware gating mechanism is implemented using the variables defined above. For each batch size, the hidden state of the last day, week, biweekly, and month is captured along with the weather information to calculate the next hidden state, which is then used in backpropagation to update the model's parameters. Backpropagation represents the computation of the gradient of the loss function with respect to the network's weights. An optimizer, a learning rate, a number of epochs, and a batch size are needed to train the Deep Learning model. The optimizer is the function that searches for the best parameters and weights to optimize the results. The learning rate is the step used by the optimizer at each iteration to minimize the loss function. The number of epochs represents the number of times the model is trained on the whole training data, and the batch size defines the number of samples used each time to update the model's weights. In particular, the Adam optimizer, a learning rate of 0.01, a number of epochs of 150, and a batch size of 156 can be used in training. An example of the architecture of the PewLSTM model with possible input and output sizes is shown in Figure 10. The PewLSTM model consists of one input layer, two hidden layers, and one output layer. The input layer has three dimensions. The first dimension corresponds to the batch size; the second corresponds to the number of past distances used to make the prediction (If we capture locations every 5 minutes between 08:00 and 21:00, the number of past distances is 156 data points). The third is the number of features used depending on the number of weather features. For example, the third dimension of the input vector is 3 when temperature and humidity are used as weather features since the first feature is the distances vector and the temperature and humidity vectors are, accordingly, the second and third features. The second and third layers in the architecture shown in Figure 10 are hidden layers, which identify features from the input data and use these to correlate between distances and core times of presence. The last layer is the output layer which constitutes the output of the PewLSTM after applying the sigmoid activation function to calculate the binary cross entropy loss. For example, an output vector of size 26 is used to predict the core time of presence the next three days between 8:00 and 21:00 with a 30 minutes interval.

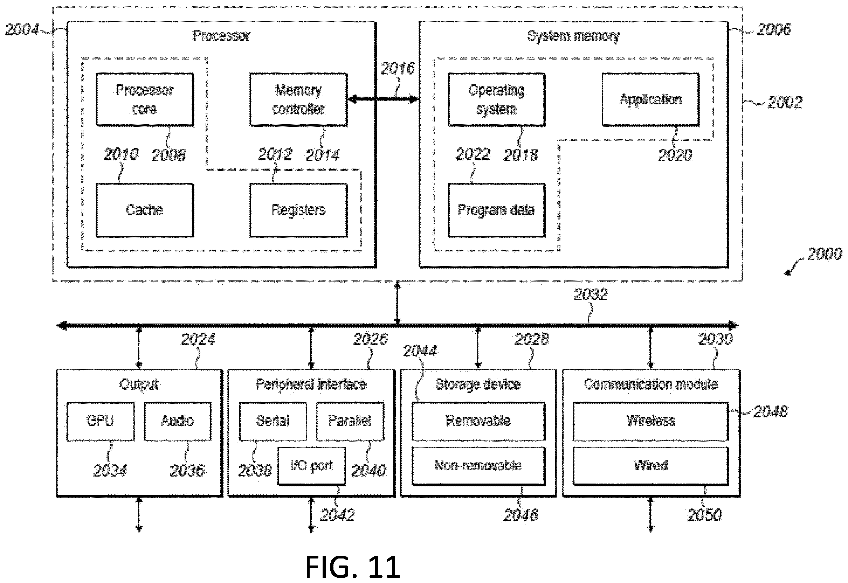

Figure 11 schematically shows a computer system for implementing methods of examples of the disclosure. In particular, Figure 12 shows an example of a computing device 2000 for example which may be arranged to implement one or more of the examples of the methods described herein. In examples, the computing device 2000 comprises main unit 2002. The main unit 2002 may comprise a processor 2004 and a system memory 2006. In examples, the processor 2004 may comprise a processor core 2008, a cache 2010, and one or more registers 2012. In examples, the processor core 2008 may comprise one or more processing cores and may comprise a plurality of cores which may run a plurality of threads. The processor 2004 may be of any suitable type such as microcontroller, microprocessor, digital signal processor or a combination of these, although it will be appreciated that other types of processor may be used.

In examples, the processor core 2008 may comprise one or more processing units. In examples, the processor core 2008 comprises one or more of a floating point unit, an arithmetic unit, a digital signal processing unit, or a combination of these and/or plurality of other processing units, although it will be appreciated that other processing units could be used. In examples, the cache 2010 may comprise a plurality of caches such as a level one cache and a level two cache, although other appropriate cache arrangements could be used.

In examples, the processor 2004 comprises a memory controller 2014 operable to allow communication between the processor 2004 and the system memory 2006 via a memory bus 2016. The memory controller 2014 may be implemented as an integral part of the processor 2004, or it may be implemented as separate component.

In examples, the system memory 2006 may be of any suitable type such as non-volatile memory (e.g. flash memory or read only memory), volatile memory (such as random access memory (RAM)), and/or a combination of volatile and non-volatile memory. In examples, the system memory 2006 may be arranged to store code for execution by the processor 2004 and/or data related to the execution. For example, the system memory may store operating system code 2018, application code 2020, and program data 2022. In examples, the application code 2020 may comprise code to implement one or more of the example methods described herein, for examples to implement the steps described above with reference to Figures 1-6, 7A-B and 8A-B. The application code 2020 may be arranged to cooperate with the program data 2022 or other media, for example to allow the prediction of core times of presence of a App user and for requesting a presence prediction of an App user.

In examples, the computing device 2000 may have additional features, functionality or interfaces. For example main unit 2002 may cooperate with one or more peripheral devices for example to implement the methods described herein. In examples, the computing device 2000 comprises, as peripheral devices, an output interface 2024, a peripheral interface 2026, a storage device 208, and a communication module 2030. In examples, the computing device comprises an interface bus 2032 arranged to facilitate communication between the main unit 2002 and the peripheral devices.

In examples, the output device 2024 may comprise output devices such as a graphical processing unit (GPU) 2034 and audio output unit 2036 for example arranged to be able to communicate with external devices such as a display, and/or loudspeaker, via one or more suitable ports such as audio/video (A/V) port. In examples, the peripheral interface 2026 may comprise a serial interface 2038, a parallel interface 2040, and a input/output port(s) 2042 which may be operable to cooperate with the main unit 2002 to allow communication with one or more external input and/or output devices via the I/O port 2042. For example, the I/O port 2042 may communication with one or more input devices such as a keyboard, mouse, touch pad, voice input device, scanner, imaging capturing device, video camera, and the like, and/or with one or more output devices such as a 2D printer (e.g. paper printer), or 3D printer, or other suitable output device. For example, data may be received via the I/O port 2042 and/or the communication module 2030.

In examples, the storage device may comprise removable storage media 2044 and/or non-removable storage media 2046. For example, the removable storage media may be random access memory (RAM), electrically erasable programmable read only memory (EEPROM), read only memory (ROM) flash memory, or other memory technology, optical storage media such as compact disc (CD) digital versatile disc (DVD) or other optical storage media, magnetic storage media such as floppy disc, magnetic tape, or other magnetic storage media. However, it will be appreciated that any suitable type of removable storage media could be used. Non-removable storage media 2046 may comprise a magnetic storage media such as a hard disk drive, or solid state hard drive, or other suitable media, although it will be appreciated that any suitable non-removable storage media could be used. The storage device 2028 may allow access by the main unit 2002 for example to implement the methods described herein.

In examples, the communication module may comprise a wireless communication module 2048 and a wired communication module 2050. For example, the wireless communication module may be arranged to communicate wirelessly via a suitable wireless communication standard for example relating to wifi, Bluetooth, near field communication, optical communication (such as infrared), acoustic communication, or via a suitable mobile telecommunications standard. The wired communication module may allow communication via a wired or optical link for example by Ethernet or optical cable. However, it will be appreciated that any suitable communication module could be used.

Referring to Figures 2 and 5, the hash function module 11, the conversion module 12 and the comparison and processing module 13 may for example be implemented by the time prediction system (DPC) system 3. In examples, one or more of the hash function module 11, the conversion module 12 and the comparison and processing module 13 may be implemented by the main unit 2002, although it will be appreciated that other suitable implementations could be used.

It will be appreciated that in examples of the disclosure, elements of the disclosed methods may be implemented in a computing device in any suitable manner. For example, a conventional computing device may be adapted to perform one or more of the methods described herein by programming/adapting one or more processors of the computing device. As such, in examples, the programming/adapting may be implemented in the form of a computer program product comprising computer implementable instructions stored on a data carrier and/or carried by a signal bearing medium, such as floppy disk, hard disk, optical disk, solid state drive, flash memory, programmable read only memory (PROM), random access memory (RAM), or any combination of these or other storage media or signal bearing medium, or transmitted via a network such as a wireless network, Ethernet, the internet, or any other combination of these or other networks.

In other words, in examples, a computer program may comprise computer readable instructions which, when implemented on a computing device, cause the computing device to carry out a method according examples of the disclosure. In examples, a storage medium may comprise the computer program, for example, as mentioned above. It will also be appreciated that other suitable computer architectures could be used such as those based on one or more parallel processors. Furthermore, at least some processing may be implemented on one or more graphical processing units (GPUs). Although computing device 2000 is described as a general purpose computing device, it will be appreciated that this could be implemented in any appropriate device, such as mobile phone, smart phone, camera, video camera, tablet device, server device, etc.... with modifications and/or adaptation if appropriate to the features described above, for example dependent on the desired functionality and hardware features.

Although a variety of techniques and examples of such techniques have been described herein, these are provided by way of example only and many variations and modifications on such examples will be apparent to the skilled person and fall within the spirit and scope of the present invention, which is defined by the appended claims and their equivalents.

**Claims**

1. Method (100) for calculating predicted core times of presence (7) of an user, the method (100) comprising:

   - forwarding (S101) address information data (1) of the user together with identification data (2) of said user together with the authentication information of a respective operator to a time prediction system (3) as first input data;
- sequentially forwarding (S102) location information data (5) of the user together with identification data (2) of said user together with the authentication information of the respective operator to the time prediction system (3) as second input data (6);
- checking (S103) the operator's authentication by the time prediction system (3);
- processing (S104) the first input data (4) and the second input data (6) by the time prediction system (3) for calculating predicted core times of presence (7) of the user as output data (8) based at least on the address information data (1) and on the location information data (5) of the user;

wherein the processing (S104) comprises converting (S105) address information data (1) of the user into a position of the address on a relative map using a conversion from longitude and latitude to a coordinate on the relative map and then hashing the corresponding coordinate to an address geohash (9), the processing furthermore comprises converting location information data (5) of the user into a position of the location on said relative map using a conversion from longitude and latitude to a coordinate on the relative map and then hashing the corresponding coordinate to a location geohash , the relative map being a hypothetical map without any real map data linked to planet earth.

2. Method (100) according to claim 1, wherein the exact position of a location on earth of the user is deleted from the address geohash (9) and location geohash (10) when converting the location information data (5) and address information data (1) of the user into positions of the address and of the location on the relative map.

3. Method (100) according to any one of claims 1 to 2, wherein the position of the address geohash (9) is periodically compared with the position of the location geohash (10) on the relative map to obtain comparison result data (14) for predicting the core times of presence (7) of the user.

4. Method (100) according to claim 3, wherein if the position of the address geohash (9) repeatedly matches the position of the location geohash (10) on the relative map in a determined time frame, then a corresponding core time of presence (7) prediction is calculated.

5. Method (100) according to claim 3 and 4, wherein the core times of presence (7) of the user are updated if a variation in the match between the position of the address geohash (9) and the position of the location geohash (10) on the relative map occurs in a predefined period of time.

6. Method (100) according to any one of claims 1 to 5, further comprising providing the time prediction system (3) with additional information data (15) as third input data (16), wherein in particular additional information data (15) comprise weather data.

7. Method (100) according to any one of claims 1 to 6, further comprising checking an authentication code by the time prediction system (3) upon receiving at least first and second input data (4, 6).

8. Method (100) according to any one of claims 1 to 7, wherein

a. the prediction of the core times of presence (7) is carried out using a Machine Learning or Deep Learning approach, in particular using a Recurrent Neural Network, RNN, model, or a Long Short-Term Memory, LSTM, model such as a Periodic LSTM with Weather-Aware Gating Mechanism, PewLSTM; and/or
b. the calculation of predicted core times (7) of at least one user at a specific address is repeated in sequences using different data processing techniques.

9. Method (100) according to any one of claims 1 to 8, wherein the first input data (4) and the second input data (6) are forwarded to the time prediction system (3) by an App operator (22).

10. Method (200) for requesting a presence prediction of at least one user at a specific address, the method comprising:

- calculating (S201) predicted core times of presence (7) of at least one user at a specific address according to the method (100) of any one of claims 1 to 9;
- generating (S202) an event (23) by the user, wherein the event (23) comprises in particular order information data with expected delivery of a product;
- forwarding (S203) a presence prediction request (17) to the time prediction system (3);

- creating (S204) an event-token (19) by the time prediction system (3);
- sending (S205) an information request (20) about core times of presence (7) of at least one user at a specific address together with the event token (19) to the time prediction system (3); and
- analyzing (S206) the validity of the event token (19) and sending a result information (21) including the previously calculated predicted core times of presence (7) of the user at the requested delivery address, wherein the result information (21) do not comprise any personal data of the user and no map data connected to real geographic positions on the earth.

11. Method (200) according to claim 10, further comprising authenticating and hashing (S207) the presence prediction request (17) by the time prediction system (3).

12. Method (200) according to any one of claims 10 to 11, further comprising deleting (S208) the event token (19) upon completion of the event (23) generated by the user.

13. Method (200) according to any one of claims 10 to 12, wherein the presence prediction request (17) comprises a delivery address (18), a user number, an authentication code and event information data, the event information data informing in particular that the event (23) is occurring.

14. A data processing system comprising means for carrying out the method (100) of any one of claims 1 to 9 and or the method (200) according to any one of claims 10 to 13.

15. A computer program product and/or a computer-readable storage medium comprising instructions which, when the program is executed by a computer, cause the computer to carry out the method (100) of any one of claims 1 to 9 and or the method (200) according to any one of claims 10 to 13.

100

FIG. 1

EP 4 390 716 A1

**FIG. 2**

FIG. 3

FIG. 4

EP 4 390 716 A1

23

Event

17

19

20

21, 7

3

Time prediction system
(DPC)

FIG. 5

FIG. 6

## Post Position API

FIG. 7A

Event API

FIG. 7B

CoreTimes API

FIG. 8A

Backup Check API

FIG. 8B

FIG. 9B

FIG. 9A

FIG. 9C

FIG. 10

FIG. 11

Europäisches
Patentamt

European
Patent Office

Office européen
des brevets

# EUROPEAN SEARCH REPORT

**Application Number**

**EP 22 21 4528**

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2019/260730 A1 (MAINALI PRADIP [BE]) 22 August 2019 (2019-08-22) * paragraph [0004] – paragraph [0004] * * paragraph [0139] – paragraph [0142] * * paragraph [0147] – paragraph [0148] * * paragraph [0155] – paragraph [0166] * * paragraph [0175] – paragraph [0182] * * paragraph [0226] – paragraph [0227] * * paragraph [0263] – paragraph [0267] * * paragraph [0294] – paragraph [0294] * * paragraph [0306] – paragraph [0310] * * figures 1A, 1B, 2 *  ----- | 1-15 | INV. G06F16/22 G06F16/29 G06F16/9537 G06N3/044 G06N3/02 G06N3/04 G06N3/0442 G06N3/048 G06N3/08 G06N3/084 G06N20/00 G06N7/01 H04W4/02 |
| A | US 2022/253791 A1 (ANDREWS CAROLYN ROSS [US] ET AL) 11 August 2022 (2022-08-11) * paragraph [0044] – paragraph [0047] * * paragraph [0052] – paragraph [0052] * * paragraph [0064] – paragraph [0067] * * paragraph [0071] – paragraph [0071] * * paragraph [0085] – paragraph [0086] * * paragraph [0089] – paragraph [0092] * * paragraph [0100] – paragraph [0100] * * paragraph [0110] – paragraph [0110] * * paragraph [0116] – paragraph [0116] * * paragraph [0119] – paragraph [0121] * * paragraph [0131] – paragraph [0131] * * paragraph [0135] – paragraph [0136] * * figures 1-3, 6, 7, 10A, 10B *  ----- | 1-15 | H04W4/021 H04W4/029 H04W12/00 H04W12/104 |
| | | | TECHNICAL FIELDS SEARCHED (IPC) |
| | | | G06F G06N H04W G06Q H04L |

The present search report has been drawn up for all claims

| Place of search | Date of completion of the search | Examiner |
|---|---|---|
| Munich | 19 May 2023 | Melis, Caterina |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

page 1 of 2

Europäisches
Patentamt

European
Patent Office

Office européen
des brevets

## EUROPEAN SEARCH REPORT

Application Number

EP 22 21 4528

### DOCUMENTS CONSIDERED TO BE RELEVANT

| Category | Citation of document with indication, where appropriate, of relevant passages | Relevant to claim |
|---|---|---|
| | | |

**CLASSIFICATION OF THE APPLICATION (IPC)**

G06Q10/02
G06Q10/04
G06Q10/10
H04L9/32
H04L9/00
H04L9/40
G06F21/62
H04L67/52
H04W12/02

**TECHNICAL FIELDS SEARCHED      (IPC)**

The present search report has been drawn up for all claims

| Place of search | Date of completion of the search | Examiner |
|---|---|---|
| Munich | 19 May 2023 | Melis, Caterina |

EPO FORM 1503 03.82 (P04C01)

**ANNEX TO THE EUROPEAN SEARCH REPORT
ON EUROPEAN PATENT APPLICATION NO.**

EP 22 21 4528

This annex lists the patent family members relating to the patent documents cited in the above-mentioned European search report.
The members are as contained in the European Patent Office EDP file on
The European Patent Office is in no way liable for these particulars which are merely given for the purpose of information.

19-05-2023

| Patent document cited in search report | | Publication date | Patent family member(s) | | Publication date |
|---|---|---|---|---|---|
| US 2019260730 | A1 | 22-08-2019 | CN | 111742313 A | 02-10-2020 |
| | | | EP | 3528150 A1 | 21-08-2019 |
| | | | EP | 3752935 A1 | 23-12-2020 |
| | | | US | 2019260730 A1 | 22-08-2019 |
| | | | US | 2022086135 A1 | 17-03-2022 |
| | | | WO | 2019158671 A1 | 22-08-2019 |
| US 2022253791 | A1 | 11-08-2022 | NONE | | |

EPO FORM P0459

For more details about this annex : see Official Journal of the European Patent Office, No. 12/82